# FASCICULE DE BREVET EUROPEEN

(11) **EP 2 619 018 B1**
(45) Date de publication et mention de la délivrance du brevet: **19.11.2014**
(21) Numéro de dépôt: 11757653.8
(22) Date de dépôt: 20.09.2011
(51) Int. Cl.: B60C 9/18

(54) **PNEUMATIQUE COMPORTANT UNE ARMATURE DE PROTECTION**
REIFEN MIT EINER SCHÜTZENDEN VERSTÄRKUNG
TYRE COMPRISING A PROTECTIVE REINFORCEMENT

(30) Priorité: 21.09.2010 FR 1057535
(43) Date de publication de la demande: 31.07.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: CERCY, Laurent, 63040 Clermont-Ferrand Cedex 9 (FR)
(74) Mandataire: Le Cam, Stéphane Georges Elie
(86) Numéro de dépôt international: PCT/EP2011/066272
(87) Numéro de publication internationale: WO 2012/038393

(56) Documents cités:
- WO-A1-2010/115861
- JP-A- 2008 126 437

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieure à 150 GPa.

Des éléments de renforcement circonférentiels sont des éléments de renforcement qui font avec la direction circonférentielle des angles compris dans l'intervalle + 8°, - 8° autour de 0°.

La direction circonférentielle du pneumatique, ou direction longitudinale, est la direction correspondant à la périphérie du pneumatique et définie par la direction de roulement du pneumatique.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

La direction transversale ou axiale du pneumatique est parallèle à l'axe de rotation du pneumatique. Une distance axiale est mesurée selon la direction axiale. L'expression « axialement intérieur à, respectivement axialement extérieur à» signifie « dont la distance axiale mesurée depuis le plan équatorial est inférieure à, respectivement supérieure à ».

La direction radiale est une direction coupant l'axe de rotation du pneumatique et perpendiculaire à celui-ci. Une distance radiale est mesurée selon la direction radiale. L'expression « radialement intérieur à, respectivement radialement extérieur à» signifie « dont la distance radiale mesurée depuis de l'axe de rotation du pneumatique est inférieure à, respectivement supérieure à".

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérésis, d'un profilé de caoutchouc couvrant au moins les côtés et les bords marginaux de l'armature de sommet et constitué d'un mélange caoutchouteux à faible hystérésis.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

La demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

Pour améliorer l'endurance de l'armature de sommet de ces pneumatiques, il a encore été proposé d'associer aux couches de sommet de travail à angle au moins une couche additionnelle d'éléments de renforcement sensiblement parallèles à la direction circonférentielle. La demande française WO 99/24269 propose notamment, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

La couche d'éléments de renforcement circonférentielles est usuellement constituées par au moins un câble métallique enroulé pour former une spire dont l'angle de pose par rapport à la direction circonférentielle est inférieur à 8°.

Les pneumatiques ainsi réalisés présentent des propriétés d'endurance améliorées qui vont notamment permettre d'envisager le rechapage des pneumatiques lorsque ceux-ci sont usés. Lors des différentes étapes de rechapage, il arrive que des pneumatiques ne puissent être réchappés car ils ont subi des agressions mécaniques ou chimiques au travers de la bande de roulement qui sont venues altérer l'armature de sommet. Comme expliqué précédemment pour lutter contre ces éventuelles agressions, de tels pneumatiques comportent au moins une couche de protection dont la fonction essentielle est de protéger le reste de l'armature de sommet ainsi que l'armature de carcasse.

La nature de ces couches de protection et plus particulièrement la nature des éléments de renforcements qui les composent conduit à une augmentation non négligeable du coût du pneumatique ainsi que de son poids.

Il est par ailleurs connu du document JP-A-2088-126437 l'utilisation d'un complexe, constitué d'un film de polymère thermoplastique entre deux couches de caoutchouc, dans un pneumatique.

Les inventeurs se sont ainsi donnés pour mission de fournir des pneumatiques pour véhicules lourds de type "Poids-Lourds", dont les performances d'endurance et d'usure sont conservées mais dont le coût de fabrication est moindre et avantageusement dont le poids est réduit.

Ce but a été atteint selon l'invention par un pneumatique à armature de carcasse radiale, constituée d'au moins une couche d'éléments de renforcement métalliques, ledit pneumatique comprenant une armature de sommet, elle-même coiffée radialement d'une bande de roulement, comportant au moins deux découpes continues circonférentiellement, ladite bande de roulement étant réunie à deux bourrelets par l'intermédiaire de deux flancs, l'armature de sommet comportant au moins un stratifié multicouches continu axialement, ledit au moins un stratifié comportant au moins un film de polymère thermoplastique étiré multiaxialement disposé entre et au contact de deux couches de composition de caoutchouc et, dans un plan méridien, les extrémités axiales du stratifié étant axialement extérieures au point axialement le plus extérieur de deux découpes continues circonférentiellement différentes.

Au sens de l'invention, un "stratifié" ou "stratifié multicouches" correspond à tout produit comportant au moins deux couches, de forme plane ou non plane, qui sont au contact l'une de l'autre, ces dernières pouvant être ou non liées, connectées entre elles ; l'expression "lié" ou "connecté" doit être interprétée de façon extensive de manière à inclure tous les moyens de liaison ou d'assemblage, en particulier par collage.

Les découpes continues circonférentiellement de la bande de roulement sont par exemple des sillons circonférentiels tels qu'on les trouve sur les pneumatiques pour poids-lourds. Ces sillons ont notamment pour fonction de permettre l'évacuation de l'eau et assure également une meilleure mise à plat du pneumatique dans l'aire de contact.

L'expression « continue circonférentiellement » signifie que la découpe fait le tour du pneumatique sans interruption.

Ces sillons présentent une largeur et une profondeur leur permettant d'assurer leurs fonctions qui offrent un passage à des éléments pouvant endommager la bande de roulement notamment dans les creux que forment ces sillons. L'épaisseur de la bande de roulement étant inférieure dans ces zones des sillons, notamment du fait de leur profondeur, le risque d'endommagement des éléments de renforcement de l'armature de sommet et de l'armature de carcasse est particulièrement sensible dans ces zones.

Avantageusement, ledit au moins un stratifié multicouches continu axialement constitue la couche radialement la plus extérieure de l'armature de sommet.

Selon un mode de réalisation préféré de l'invention, chaque extrémité axiale du stratifié est axialement extérieure au point axialement le plus extérieur de la découpe circonférentielle axialement la plus à l'extérieur.

Notamment dans le cas d'un pneumatique destiné à équiper l'essieu moteur d'un véhicule, ce mode de réalisation préféré permet de mettre en place un stratifié sous l'ensemble des sillons du pneumatique.

Dans le cas de pneumatique destiné à équiper l'essieu directeur d'un véhicule, les essais ont montré que la superposition radiale du stratifié multicouches avec une partie seulement des sillons, et plus spécifiquement au moins les deux sillons axialement les plus à l'extérieur de part et d'autre du pneumatique n'étant radialement pas superposés au stratifié, est suffisante pour assurer la protection des éléments de renforcements des armatures de sommet et de carcasse.

Les inventeurs ont su mettre en évidence qu'un pneumatique ainsi réalisé selon l'invention conduit effectivement à des résultats en termes de protection des armatures de sommet et de carcasse tout à fait satisfaisants. Le stratifié multicouches possède une structure souple et hautement déformable qui s'est révélée présenter, de manière inattendue, une résistance élevée aux efforts de perforation. Il s'avère que la protection conférée est équivalente à celle des couches de protections précédemment évoquées qui sont renforcées par des câbles métalliques.

Les essais ont en outre montré que le stratifié multicouches a également pour fonction de constituer une barrière à l'eau et à l'oxygène, autant d'éléments corrosifs vis-à-vis de câbles métalliques présents dans les couches constitutives de l'armature de sommet et de l'armature de carcasse.

Les inventeurs ont encore su mettre en évidence que la présence du stratifié multicouches peut permettre de s'affranchir de la présence d'une couche de protection tout en conservant une protection suffisante des armatures de sommet et de carcasse contre les agressions au travers de la bande de roulement.

En outre, l'épaisseur de ce stratifié et sont poids sont nettement inférieurs à ceux d'une couche de protection. Un dernier avantage d'un stratifié selon l'invention est son coût, nettement inférieur à celui d'une couche d'éléments de renforcement destinée à être utilisée comme couche de protection.

Selon un mode de réalisation préféré de l'invention, la distance axiale entre l'extrémité axiale du stratifié et le point axialement le plus extérieur de la découpe continue circonférentiellement axialement la plus proche de ladite extrémité du stratifié est inférieure à 12 mm.

Selon ce mode de réalisation préféré de l'invention, le positionnement des extrémités du stratifié permet d'améliorer encore les propriétés d'endurance du pneumatique, les extrémités du stratifié étant situées dans des zones de moindre échauffement de la bande de roulement du pneumatique.

Selon un mode de réalisation préféré de l'invention, la distance axiale entre l'extrémité axiale du stratifié et le point axialement le plus extérieur de la découpe continue circonférentiellement axialement la plus proche de ladite extrémité du stratifié est supérieure à 4 mm. Une telle valeur garantit une protection contre toute agression pouvant survenir depuis l'intérieure de la découpe continue circonférentiellement.

Lorsque chaque extrémité axiale du stratifié est axialement extérieure au point axialement le plus extérieur de la découpe circonférentielle axialement la plus à l'extérieur, la distance axiale entre l'extrémité axiale du stratifié et le point axialement le plus extérieur de la découpe continue circonférentiellement axialement la plus à l'extérieur est donc de préférence supérieure à 4 mm et avantageusement inférieure à 12 mm.

Selon une réalisation avantageuse de l'invention, l'armature de sommet du pneumatique comporte au moins, deux stratifiés disposés au contact l'un de l'autre circonférentiellement pour former une couche de protection continue circonférentiellement.

Un tel agencement permet aux stratifiés de subir une conformation du pneumatique notamment lors de sa phase de cuisson sans voir ses propriétés modifiées.

Avantageusement encore, les extrémités desdits au moins deux stratifiés sont radialement superposées selon la direction circonférentielle pour garantir une protection efficace sur toute la périphérie. Après cuisson du pneumatique, cette superposition des extrémités est encore avantageusement d'au moins 4 mm.

Selon des modes de réalisations préférés selon ces réalisations avantageuses de l'invention, les au moins deux stratifiés présentent des longueurs selon la direction circonférentielle sensiblement équivalentes.

Avantageusement encore les extrémités desdits au moins deux stratifiés selon la direction circonférentielle présentent une découpe formant un angle avec la direction circonférentielle sensiblement équivalent à celui des éléments de renforcement de la couche d'armature de sommet radialement la plus proche desdits au moins deux stratifiés.

Selon l'invention, tout film de polymère thermoplastique étiré multiaxialement, c'est-à-dire étiré, orienté dans plus d'une direction, est utilisable. De tels films étirés multiaxialement sont bien connus, utilisés essentiellement à ce jour dans l'industrie de l'emballage ("packaging"), de l'alimentaire, dans le domaine électrique ou encore en tant que support de revêtements magnétiques.

Ils sont préparés selon diverses techniques d'étirage bien connues, toutes destinées à conférer au film des propriétés mécaniques élevées dans plusieurs directions principales et non dans une seule direction comme c'est le cas pour des fibres usuelles en polymère thermoplastique (par exemple PET ou "Nylon") qui sont de manière connue étirées monoaxialement lors de leur filage au fondu.

De telles techniques font appel à des étirages multiples dans plusieurs directions, étirages longitudinaux, transversaux, étirages planaires. A titre d'exemple, on peut notamment citer la technique de bi-étirage par soufflage. Les étirages peuvent être réalisés en une ou plusieurs fois, les étirages lorsqu'ils sont plusieurs pouvant être simultanés ou séquencés. Le ou les taux d'étirage appliqués sont fonction des propriétés mécaniques finales visées, généralement supérieurs à 2.

Des films de polymère thermoplastique étirés multiaxialement ainsi que leur procédés d'obtention ont été décrits dans de nombreux documents brevets, par exemple dans les documents FR 2539349 (ou GB 2134442), DE 3621205, EP 229346 (ou US 4876137), EP 279611 (ou US 4867937), EP 539302 (ou US 5409657) et WO 2005/011978 (ou US 2007/0031691).

De préférence, le film de polymère thermoplastique utilisé présente, quelle que soit la direction de traction considérée, un module en extension noté E qui est supérieur à 500 MPa (notamment entre 500 et 4000 MPa), plus préférentiellement supérieur à 1000 MPa (notamment entre 1000 et 4000 MPa), plus préférentiellement encore supérieur à 2000 MPa. Des valeurs de module E comprises entre 2000 et 4000 MPa, en particulier entre 3000 et 4000 MPa sont particulièrement souhaitables.

Selon un autre mode préférentiel, quelle que soit la direction de traction considérée, la contrainte maximale en traction notée σₘₐₓ du film de polymère thermoplastique est de préférence supérieure à 80 MPa (notamment entre 800 et 200 MPa), plus préférentiellement supérieure à 100 MPa (notamment entre 100 et 200 MPa). Des valeurs de contrainte σₘₐₓ supérieures à 150 MPa, en particulier comprises entre 150 et 200 MPa, sont particulièrement souhaitables.

Selon un autre mode préférentiel, quelle que soit la direction de traction considérée, le seuil de déformation plastique noté Yp (connu aussi sous le terme anglais de "*Yield point")* du film de polymère thermoplastique est situé au-delà de 3% d'allongement, notamment entre 3 et 15%. Des valeurs Yp au-delà de 4%, en particulier comprises entre 4 et 12%, sont particulièrement souhaitables.

Selon un autre mode préférentiel, quelle que soit la direction de traction considérée, le film de polymère thermoplastique présente un allongement à la rupture noté Ar qui est supérieur à 40% (notamment entre 40 et 200%), plus préférentiellement supérieur à 50%. Des valeurs de Ar comprises entre 50 et 200% sont particulièrement souhaitables.

Les propriétés mécaniques énoncées ci-dessus sont bien connues de l'homme du métier, déduites des courbes force-allongement, mesurées par exemple selon la norme ASTM D638-02 pour des bandes d'épaisseur supérieure à 1 mm, ou encore selon la norme ASTM D882-09 pour des feuilles fines ou films dont l'épaisseur est au plus égale à 1 mm ; les valeurs de module E et de contrainte σₘₐₓ ci-dessus, exprimées en MPa, sont calculées par rapport à la section initiale de l'éprouvette tractionnée.

Le film de polymère thermoplastique utilisé est de préférence du type stabilisé thermiquement, c'est-à-dire qu'il a subi, après étirage, un ou plusieurs traitements thermiques destinés de manière connue à limiter sa contraction (ou retrait) thermique à haute température ; de tels traitements thermiques peuvent consister notamment en des recuits, des trempes ou des combinaisons de tels recuits ou trempes.

Ainsi, et de préférence, le film de polymère thermoplastique utilisé présente, après 30 min à 150°C, une contraction relative de sa longueur qui est inférieure à 5%, de préférence inférieure à 3% (mesurée sauf précisions différentes selon ASTM D1204-08).

La température de fusion du polymère thermoplastique utilisé est préférentiellement choisie supérieure à 100°C, plus préférentiellement supérieure à 150°C, en particulier supérieure à 200°C.

Le polymère thermoplastique est choisi préférentiellement dans le groupe constitué par les polyamides, les polyesters et les polyimides, plus particulièrement dans le groupe constitué par les polyamides et les polyesters. Parmi les polyamides, on peut citer notamment les polyamides 4-6, 6, 6-6, 11 ou 12. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate).

Le polymère thermoplastique est préférentiellement un polyester, plus préférentiellement un PET ou PEN.

Des exemples de films de polymère thermoplastique PET étirés multiaxialement sont par exemple les films de PET bi-étirés commercialisés sous les dénominations "Mylar" et "Melinex" (société DuPont Teijin Films), ou encore "Hostaphan" (société Mitsubishi Polyester Film).

Dans le stratifié multicouches de l'invention, l'épaisseur du film de polymère thermoplastique est de préférence comprise entre 0,05 et 1 mm, plus préférentiellement entre 0,1 et 0,7 mm et de préférence encore entre 0,20 et 0,60 mm.

Le film de polymère thermoplastique peut comporter des additifs ajoutés au polymère, notamment au moment de la mise en forme de ce dernier, ces additifs pouvant être par exemple des agents de protection contre le vieillissement, des plastifiants, des charges telles que silice, argiles, talc, kaolin ou encore fibres courtes ; des charges peuvent par exemple être utilisées pour rendre la surface du film rugueuse et contribuer ainsi à améliorer sa prise de colle et/ou son adhésion aux couches de caoutchouc avec lesquelles il est destiné à être au contact.

Selon un mode de réalisation de l'invention, chaque couche de composition de caoutchouc, ou ci-après "couche de caoutchouc", constitutive du stratifié multicouches selon l'invention est à base d'au moins un élastomère.

De préférence, l'élastomère est un élastomère diénique. De manière connue, les élastomères diéniques peuvent être classés dans deux catégories : "essentiellement insaturés" ou "essentiellement saturés". On entend par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Bien qu'elle soit applicable à tout type d'élastomère diénique, la présente invention est préférentiellement mise en oeuvre avec un élastomère diénique du type fortement insaturé.

Cet élastomère diénique est plus préférentiellement choisi dans le groupe constitué par les polybutadiènes (BR), le caoutchouc naturel (NR), les polyisoprènes de synthèse (IR), les différents copolymères de butadiène, les différents copolymères d'isoprène, et les mélanges de ces élastomères, de tels copolymères étant notamment choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Un mode de réalisation particulièrement préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Selon un mode de réalisation préférentiel, chaque couche de composition de caoutchouc comporte 50 à 100 pce de caoutchouc naturel. Selon d'autres modes de réalisation préférentiels, l'élastomère diénique peut être constitué, en tout ou partie, d'un autre élastomère diénique tel que, par exemple, un élastomère SBR utilisé en coupage ou non avec un autre élastomère, par exemple du type BR.

La composition de caoutchouc peut contenir un seul ou plusieurs élastomère(s) diénique(s), ce(s) dernier(s) pouvant être utilisé(s) en association avec tout type d'élastomère synthétique autre que diénique, voire avec des polymères autres que des élastomères. La composition de caoutchouc peut comporter également tout ou partie des additifs habituellement utilisés dans les matrices de caoutchouc destinées à la fabrication de pneumatiques, tels que par exemple des charges renforçantes comme le noir de carbone ou la silice, des agents de couplage, des agents anti-vieillissement, des antioxydants, des agents plastifiants ou des huiles d'extension, que ces derniers soient de nature aromatique ou non-aromatique (notamment des huiles très faiblement ou non aromatiques, par exemple du type naphténiques ou paraffiniques, à haute ou de préférence à basse viscosité, des huiles MES ou TDAE), des résines plastifiantes à haute Tg supérieure à 30°C, des agents facilitant la mise en oeuvre (processabilité) des compositions à l'état cru, des résines tackifiantes, des agents antiréversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple, notamment sels de cobalt, de nickel ou de lanthanide, un système de réticulation ou de vulcanisation.

De préférence, le système de réticulation de la composition de caoutchouc est une système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, l'accélérateur primaire de vulcanisation, par exemple un sulfénamide, est utilisé à un taux préférentiel compris entre 0,5 et 10 pce. Le taux de charge renforçante, par exemple du noir de carbone ou de la silice, est de préférence supérieur à 50 pce, notamment compris entre 50 et 150 pce.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme silices conviennent notamment les silice précipitées ou pyrogénées présentant une surface BET inférieure à 450 m²/g, de préférence de 30 à 400 m²/g.

L'homme de l'art saura, à la lumière de la présente description, ajuster la formulation de la composition de caoutchouc afin d'atteindre les niveaux de propriétés (notamment module d'élasticité) souhaités, et adapter la formulation à la nature des couches de renforcement et/ou aux mélanges polymériques environnants tels que notamment les couches d'éléments de renforcement de l'armature de sommet et la bande de roulement.

De préférence, la composition de caoutchouc présente, à l'état réticulé, un module sécant en extension, à 10% d'allongement, qui est compris entre 4 et 25 MPa, plus préférentiellement entre 4 et 20 MPa ; des valeurs comprises notamment entre 5 et 15 MPa se sont révélées convenir particulièrement pour le renforcement des ceintures de bandages de pneumatiques. Les mesures de module sont effectuées en traction, sauf indication différente selon la norme ASTM D 412 de 1998 (éprouvette "C") : on mesure en seconde élongation (c'est-à-dire après un cycle d'accommodation) le module sécant "vrai" (c'est-à-dire ramené à la section réelle de l'éprouvette) à 10% d'allongement, noté ici Ms et exprimé en MPa (conditions normales de température et d'hygrométrie selon la norme ASTM D 1349 de 1999).

Dans le stratifié multicouches selon l'invention, l'épaisseur de chaque couche de caoutchouc est de préférence comprise entre 0,05 et 2 mm, plus préférentiellement entre 0,1 et 1 mm et de préférence encore entre 0,2 et 0,8 mm.

Selon un mode de réalisation préférentiel, dans le stratifié multicouches du selon l'invention, le film de polymère thermoplastique est pourvu d'une couche adhésive au regard de chaque couche de composition de caoutchouc avec laquelle il est au contact.

Pour faire adhérer le caoutchouc au film de polymère thermoplastique, on pourra utiliser tout système adhésif approprié, par exemple une simple colle textile du type "RFL" (résorcinol-formaldéhyde-latex) comportant au moins un élastomère diénique tel que du caoutchouc naturel, ou toute colle équivalente connue pour conférer une adhésion satisfaisante entre du caoutchouc et des fibres thermoplastiques conventionnelles telles que des fibres en polyester ou en polyamide.

A titre d'exemple, le procédé d'encollage peut comporter essentiellement les étapes successives suivantes : passage dans un bain de colle, suivi d'un essorage (par exemple par soufflage, calibrage) pour éliminer l'excès de colle ; puis séchage par exemple par passage dans un four (par exemple pendant 30 s à 180°C) et enfin traitement thermique (par exemple pendant 30 s à 230°C).

Avant l'encollage ci-dessus, il peut être avantageux d'activer la surface du film, par exemple par voie mécanique et/ou physique et/ou chimique, pour améliorer sa prise de colle et/ou son adhésion finale au caoutchouc. Un traitement mécanique pourra consister par exemple en une étape préalable de matage ou de rayage de la surface ; un traitement physique pourra consister par exemple en un traitement par un rayonnement tel qu'un faisceau d'électrons ; un traitement chimique pourra par exemple consister en un passage préalable dans un bain de résine époxy et/ou composé isocyanate.

La surface du film de polymère thermoplastique étant en règle générale particulièrement lisse, il peut être également avantageux d'ajouter un épaississant à la colle utilisée, afin d'améliorer la prise totale de colle du film lors de son encollage.

L'homme du métier comprendra aisément que, dans le stratifié multicouches, la connexion entre le film de polymère thermoplastique et chaque couche de caoutchouc avec laquelle il est au contact est assurée définitivement lors de la cuisson (réticulation) finale du pneumatique.

Selon une variante de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres variantes de réalisation de l'invention, l'armature de sommet comporte encore au moins une couche d'éléments de renforcement circonférentiels.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

Selon un mode de réalisation avantageux de l'invention, le stratifié présente une largeur axiale inférieure à la largeur axiale de la couche de travail la moins large. Selon ce mode de réalisation la distance mesurée selon la direction axiale entre l'extrémité de la couche de travail la plus étroite et l'extrémité du stratifié est supérieure ou égale à 10 mm. Une telle réalisation présente un intérêt économique du fait de la limitation de la largeur du stratifié et un intérêt relatif au poids du pneumatique. Par ailleurs, les inventeurs ont su mettre en évidence que les agressions subies par le pneumatique sont plus fréquentes dans la partie centrale de la bande de roulement. Une largeur du stratifié plus étroite que celles des autres couches de l'armature de sommet peut ainsi être suffisante en termes de protection desdites autres couches.

Selon un autre mode de réalisation de l'invention, le stratifié présente une largeur axiale supérieure à la largeur axiale de la couche de travail la moins large, telle qu'il recouvre les bords de la couche de travail la moins large.

Les essais réalisés avec un stratifié conforme à l'invention ont encore montré que notamment du fait de son épaisseur inférieure à celle d'une couche de protection comportant des éléments de renforcement, le stratifié présente en outre l'avantage d'être faiblement hystérétique. Une telle diminution des propriétés hystérétiques de cet élément constitutif du pneumatique peut permettre de réduire la résistance au roulement dudit pneumatique.

D'autres détails et caractéristiques avantageux de l'invention ressortiront ci-après de la description des exemples de réalisation de l'invention en référence aux figures 1 à 4 qui représentent :
- figure1, une vue méridienne d'un schéma d'un pneumatique selon l'invention,
- figure2, une représentation schématique d'une demi-vue du pneumatique de la figure1, qui se prolonge de manière symétrique par rapport à l'axe XX' qui représente le plan médian circonférentiel, ou plan équatorial,
- figure 3, une représentation schématique d'une vue en coupe d'un stratifié conforme à l'invention,
- figure 4, une représentation schématique de la jonction entre deux stratifiés.

Les figures ne sont pas représentées à l'échelle pour en simplifier la compréhension.

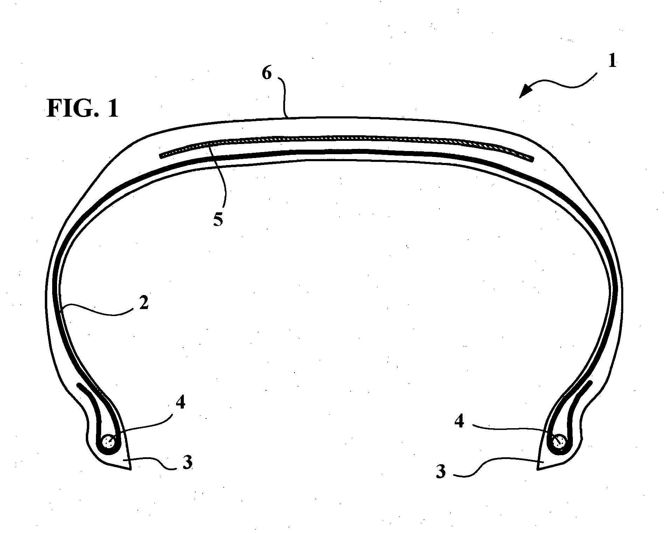

Sur la figure 1, le pneumatique 1, de dimension 315/70 R 22.5, comprend une armature de carcasse radiale 2 ancrée dans deux bourrelets 3, autour de tringles 4. L'armature de carcasse 2 est formée d'une seule couche de câbles métalliques. L'armature de carcasse 2 est frettée par une armature de sommet 5, elle-même coiffée d'une bande de roulement 6.

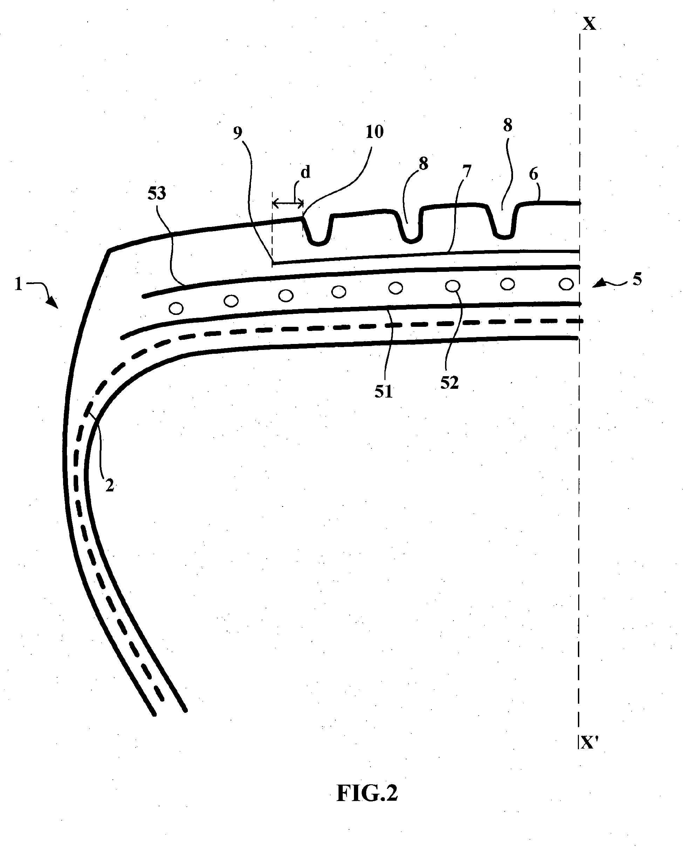

Comme illustré sur la figure 2, l'armature de sommet 5 est formée radialement de l'intérieur à l'extérieur :
- d'une première couche de travail 51 formée de câbles métalliques inextensibles 11.35 non frettés, continus sur toute la largeur de la nappe, orientés d'un angle égal à 18°,
- d'une couche 52 d'éléments de renforcement circonférentiels formée de câbles métalliques en acier 21x23, de type "bi-module",
- d'une seconde couche de travail 53 formée de câbles métalliques inextensibles 11.35 non frettés, continus sur toute la largeur de la nappe, orientés d'un angle égal à 18° et croisés aux câbles métalliques de la première couche de travail,
- d'un stratifié multicouches 7 conformément à l'invention.

Le stratifié multicouches 7 est constitué lui-même d'un film de polymère thermoplastique étiré multiaxialement disposé entre deux couches de caoutchouc avec lesquelles il est au contact.

La bande de roulement comporte six sillons 8 ou découpes continues circonférentiellement.

Les extrémité axialement extérieures 9 du stratifié 7 sont axialement distantes des points 10 axialement les plus extérieurs des sillons 8 d'une distance d égale à 10 mm, et donc compris entre 4 et 12 mm conformément à l'invention.

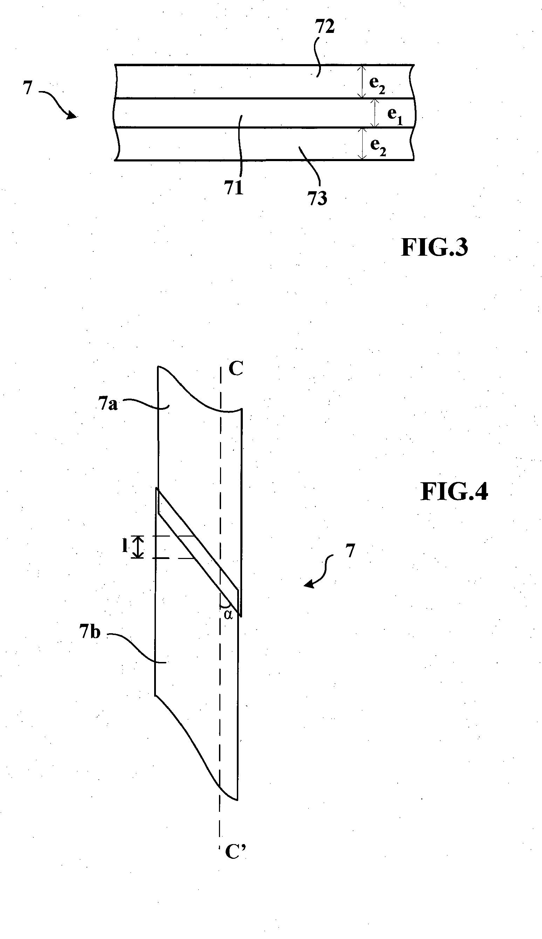

Le stratifié multicouches 7 tel qu'illustré plus en détail sur la figure 3 est constitué d'un film 71 de PET bi-étiré, d'épaisseur e₁ égale à environ 0,35 mm, disposé "en sandwich" entre deux couches 72, 73 de composition de caoutchouc d'épaisseur e₂ égale à environ 0,4 mm, le stratifié ayant donc une épaisseur totale (e₁+2e₂) d'environ 1,15 mm. La composition de caoutchouc utilisée est une composition conventionnelle pour le calandrage de nappes métalliques de ceinture de bandage pneumatique, à base de caoutchouc naturel, de noir de carbone, d'un système de vulcanisation et des additifs usuels. L'adhésion entre le film de PET et chaque couche de caoutchouc est assurée par une colle du type RFL qui a été déposée de manière connue, comme indiqué précédemment.

La figure 4 illustre très schématiquement la jonction entre deux segments 7a et 7b constituant le stratifié 7 sur un tour de roue, chacun des segments couvrant un secteur d'environ 180° dans le cas présent. Pour simplifier la compréhension de la figure, les bords des deux segments ont été légèrement décalés. Après cuisson, les extrémités des segments 7a et 7b restent radialement superposés sur une longueur 1 égale à 5 mm, mesurée selon la direction circonférentielle CC'.

Conformément à l'invention, l'extrémité des segments 7a et 7b est orientée d'un angle α égal à 18° par rapport à la direction circonférentielle CC' identique à l'angle que forment les éléments de renforcement de la couche de travail 53 avec la direction circonférentielle.

Le film de polymère thermoplastique étiré multiaxialement présente, quelle que soit la direction de traction considérée, les propriétés mécaniques suivantes :
- un module en extension E supérieur à 500 MPa ;
- une contrainte maximale en traction σₘₐₓ supérieure à 100 MPa ;
- un seuil de déformation plastique Yp compris entre 5 et 10% ;
- un allongement à la rupture noté Ar supérieur à 50%.

La qualité de la protection conférée par le stratifié multicouches peut être appréciée par un test dit de perforation consistant à mesurer la résistance à la perforation par un indenteur. Le principe de ce test est bien connu et décrit par exemple dans la norme ASTM F1306-90.

Lors de tests de perforation comparatifs, on a testé :
- d'une part, un stratifié multicouches 7 tel que décrit précédemment ;
- d'autre part, pour comparaison, une couche d'éléments de renforcement habituellement utilisée comme couche de protection dans les pneumatiques poids-lourds. Elle est constituée d'éléments de renforcement métalliques disposés parallèlement entre eux, dans un plan, selon un pas de pose d'environ 2,5 mm. Les d'éléments de renforcement sont enrobés dans deux couches de calandrage en caoutchouc de façon à former au dos des câbles une épaisseur égale à e₂ soit environ 0,4 mm.

Les éléments de renforcement de cette couche habituellement utilisée comme couche de protection sont des câbles multitorons de construction dite "6 x 0,35" ou "3 x 2 x 0,35", c'est-à-dire des câbles constitués chacun de 3 torons de 2 fils de diamètre 0,35 mm, assemblés entre eux par câblage, pour former des câbles métalliques élastiques. Le diamètre total (ou diamètre d'encombrement) de ces câbles est de 1,4 mm environ, si bien que le tissu métallique final a une épaisseur totale d'environ 2,2 mm.

L'indenteur métallique utilisé est de forme cylindrique (diamètre 4,5 ± 0,05 mm), conique à son extrémité (angle de 30°± 2) et tronqué à un diamètre de 1 mm. L'échantillon de composite testé (stratifié multicouches selon l'invention ou tissu métallique témoin) a été fixé sur un support métallique d'épaisseur 18 mm qui était percé, à l'aplomb de l'indenteur, d'un trou de diamètre 12,7 mm pour permettre le passage libre de l'indenteur à travers l'échantillon perforé et sa plaque support.

Pour caractériser la résistance à la perforation, on enregistre la courbe force-déplacement de l'indenteur ci-dessus (équipé de capteurs reliés à la machine de traction), traversant l'échantillon à une vitesse de 10 cm/min.

Le tableau ci-dessous donne le détail des mesures enregistrées, la base 100 étant retenue pour le composite témoin : le module de fléchissement représente la pente initiale de la courbe force-déplacement ; la force à la perforation est la force maximale enregistrée avant perforation de l'échantillon par la pointe de l'indenteur ; l'allongement à la perforation est l'allongement relatif enregistré au moment de la perforation.

| | Epaisseur (mm) | Module de fléchissement | Force à la perforation | Allongement à la perforation |
|---|---|---|---|---|
| Témoin | 2,20 | 100 | 100 | 100 |
| Invention | 1,15 | 93 | 92 | 103 |

A la lecture de ce tableau, on constate que le stratifié multicouches selon l'invention présente, malgré une épaisseur pratiquement réduite de moitié par rapport à la solution témoin et l'absence de fils de renforcement, une résistance à la perforation quasiment équivalente à celle du tissu métallique habituel.

Des essais de roulage ont été réalisés avec des pneumatiques réalisés selon l'invention conformément à la représentation des figures, et d'autres avec des pneumatiques dits de référence.

Les pneumatiques de référence diffèrent des pneumatiques selon l'invention par la présence d'une couche de protection telle que décrite précédemment en lieu et place du stratifié multicouches.

Des essais d'endurance en roulage sur volant ont été réalisés sur une machine de tests imposant aux pneumatiques une charge de 4415 daN et une vitesse de 40 km/h. Les essais ont été réalisés pour les pneumatiques selon l'invention avec des conditions identiques à celles appliquées aux pneumatiques de référence. Les roulages sont arrêtés dès que les pneumatiques présentent des dégradations.

Les essais ainsi réalisés ont montré que les distances parcourues lors de chacun de ces tests sont sensiblement identiques pour les pneumatiques selon l'invention et les pneumatiques de référence ; les distances parcourues sont de l'ordre 250 000 km.

Par ailleurs, pour la dimension considérée lors des essais, la masse du stratifié est environ 10 fois plus légère que celle d'une couche de protection et conduit à un gain en masse du pneumatique d'environ 3%.

De la même façon, le coût du stratifié est au moins trois fois moins élevé que celui de la couche d'éléments de renforcement et conduit à gain sur le prix de revient du pneumatique d'environ 3 %.

## Revendications

1. Pneumatique (1) à armature de carcasse radiale (2), constituée d'au moins une couche d'éléments de renforcement métalliques, ledit pneumatique comprenant une armature de sommet (5), elle-même coiffée radialement d'une bande de roulement (6) comportant au moins deux découpes (8) continues circonférentiellement, ladite bande de roulement étant réunie à deux bourrelets par l'intermédiaire de deux flancs, **caractérisé en ce que** l'armature de sommet (5) comporte au moins deux stratifiés multicouches continus axialement (7a, 7b) disposés au contact l'un de l'autre circonférentiellement pour former une couche de protection continue circonférentiellement, **en ce que** lesdits au moins deux stratifiés (7a, 7b) comportent au moins un film de polymère thermoplastique (71) étiré multiaxialement disposé entre et au contact de deux couches (72, 73) de composition de caoutchouc et **en ce que,** dans un plan méridien, les extrémités axiales (9) desdits au moins deux stratifiés (7a, 7b) sont respectivement axialement extérieures aux points (10) axialement les plus extérieurs de deux découpes (8) continues circonférentiellement différentes.

2. Pneumatique (1) selon la revendication 1, **caractérisé en ce que** chaque extrémité axiale (9) desdits au moins deux stratifiés (7a, 7b) est axialement extérieure au point (10) axialement le plus extérieur de la découpe (8) circonférentielle axialement la plus à l'extérieur.

3. Pneumatique (1) selon la revendication 1 ou 2, **caractérisé en ce que** la distance axiale (d) entre l'extrémité axiale (9) desdits au moins deux stratifiés (7a, 7b) et le point (10) axialement le plus extérieur de la découpe continue circonférentiellement axialement la plus proche de ladite extrémité (9) desdits au moins deux stratifiés (7a, 7b) est inférieure à 12 mm.

4. Pneumatique (1) selon l'une des revendications 1 à 3, **caractérisé en ce que** la distance axiale (d) entre l'extrémité axiale (9) desdits au moins deux stratifiés (7a, 7b) et le point (10) axialement le plus extérieur de la découpe (8) continue circonférentiellement axialement la plus proche de ladite extrémité (9) desdits au moins deux stratifiés (7a, 7b) est supérieure à 4 mm.

5. Pneumatique (1) selon l'une des revendications précédentes, **caractérisé en ce que** les extrémités desdits au moins deux stratifiés multicouches (7a, 7b) selon la direction circonférentielle présentent une découpe formant un angle (α) avec la direction circonférentielle sensiblement équivalent à celui des éléments de renforcement de la couche d'armature de sommet radialement la plus proche desdits au moins deux stratifiés (7a, 7b).

6. Pneumatique (1) selon l'une des revendications précédentes, **caractérisé en ce** lesdits au moins deux stratifiés (7a, 7b) présentent une largeur axiale inférieure à la largeur axiale de la couche de travail la moins large.

7. Pneumatique (1) selon l'une des revendications précédentes, **caractérisé en ce que** le film de polymère thermoplastique (71) présente, quelle que soit la direction de traction considérée, un module en extension noté E qui est supérieur à 500 MPa.

8. Pneumatique (1) selon l'une des revendications précédentes, **caractérisé en ce que** le film de polymère thermoplastique (71) présente, quelle que soit la direction de traction considérée, une contrainte maximale en traction notée σmax qui est supérieure à 80 MPa.

9. Pneumatique (1) selon l'une des revendications précédentes, **caractérisé en ce que** le film de polymère thermoplastique (71) présente, quelle que soit la direction de traction considérée, un allongement à la rupture noté Ar qui est supérieur à 40%.

10. Pneumatique selon l'une des revendications précédentes, **caractérisé en ce que** le film de polymère thermoplastique est stabilisé thermiquement.

11. Pneumatique (1) selon l'une des revendications précédentes, **caractérisé en ce que** le polymère thermoplastique est un polyester.

12. Pneumatique (1) selon la revendication 11, **caractérisé en ce que** le polyester est un polyéthylène téréphthalate ou un polyéthylène naphthalate.

13. Pneumatique (1) selon l'une des revendications précédentes, **caractérisé en ce que** l'épaisseur du film de polymère thermoplastique (71) est comprise entre 0,05 et 1 mm.

14. Pneumatique (1) selon l'une des revendications précédentes, **caractérisé en ce que** l'épaisseur de chaque couche (72, 73) de composition de caoutchouc est comprise entre 0,05 et 2 mm

15. Pneumatique (1) selon l'une des revendications précédentes, **caractérisé en ce que** l'armature de sommet (5) est formée d'au moins deux couches de sommet de travail (51, 53) d'éléments de renforcement inextensibles, croisés d'une couche à l'autre en faisant avec la direction circonférentielle des angles compris entre 10° et 45°.

16. Pneumatique (1) selon l'une des revendications précédentes, **caractérisé en ce que** l'armature de sommet (5) comporte au moins une couche (52) d'éléments, de renforcement circonférentiels.

17. Pneumatique selon l'une des revendications précédentes, **caractérisé en ce que** l'armature de sommet (5) comporte en outre une couche de triangulation formée d'éléments de renforcement métalliques faisant avec la direction circonférentielle des angles supérieurs à 60°.

## Patentansprüche

1. Reifen (1) mit einer radialen Karkassenbewehrung (2), die aus mindestens einer Schicht metallischer Verstärkungselemente besteht, wobei der Reifen eine Scheitelbewehrung (5) aufweist, auf der wiederum radial eine Laufdecke (6) mit mindestens zwei umfänglich durchgehenden Schnitten (8) sitzt, wobei die Laufdecke mit zwei Wülsten über zwei Flanken verbunden ist, **dadurch gekennzeichnet, dass** die Scheitelbewehrung (5) mindestens zwei axial durchgehende mehrschichtige Laminate (7a, 7b) aufweist, die miteinander umfänglich in Berührung angeordnet sind, um eine umfänglich durchgehende Schutzschicht auszubilden, dass die mindestens zwei Laminate (7a, 7b) mindestens eine in mehrere Achsen gestreckte Thermoplast-Polymerfolie (71) aufweist, die zwischen und in Berührung mit zwei Schichten (72, 73) aus Kautschukzusammensetzung angeordnet ist, und dass die axialen Enden (9) der mindestens zwei Laminate (7a, 7b) in einer mittleren Ebene jeweils axial außerhalb von den axial am weitesten außerhalb liegenden Punkten (10) von zwei unterschiedlichen umfänglich durchgehenden Schnitten (8) liegen.

2. Reifen (1) nach Anspruch 1, **dadurch gekennzeichnet, dass** jedes axiale Ende (9) der mindestens zwei Laminate (7a, 7b) axial außerhalb des Punkts (10) liegt, der axial am weitesten außerhalb des umfänglichen Schnitts (8), der axial am weitesten außerhalb liegt, liegt.

3. Reifen (1) nach Anspruch 1 oder 2, **dadurch gekennzeichnet, dass** die axiale Entfernung (d) zwischen dem axialen Ende (9) der mindestens zwei Laminate (7a, 7b) und dem Punkt (10), der axial am weitesten außerhalb des umfänglich durchgehenden Schnitts liegt, der axial dem Ende (9) der mindestens zwei Laminate (7a, 7b) am nächsten liegt, kleiner ist als 12 mm.

4. Reifen (1) nach einem der Ansprüche 1 bis 3, **dadurch gekennzeichnet, dass** die axiale Entfernung (d) zwischen einem axialen Ende (9) der mindestens zwei Laminate (7a, 7b) und dem Punkt (10), der axial am weitesten außerhalb des umfänglich durchgehenden Schnitts (8) liegt, der axial dem Ende (9) der mindestens zwei Laminate (7a, 7b) am nächsten liegt, größer ist als 4 mm.

5. Reifen (1) nach einem der vorhergehenden Ansprüche, **dadurch gekennzeichnet, dass** die Enden der mindestens zwei mehrschichtigen Laminate (7a, 7b) entlang der umfänglichen Richtung einen Schnitt aufweisen, der einen Winkel (α) mit der umfänglichen Richtung bildet, der im Wesentlichen gleich dem der Verstärkungselemente der Scheitelbewehrungsschicht ist, die radial den mindestens zwei Laminaten (7a, 7b) am nächsten liegt.

6. Reifen (1) nach einem der vorhergehenden Ansprüche, **dadurch gekennzeichnet, dass** die mindestens zwei Laminate (7a, 7b) eine geringere axiale Breite als die axiale Breite der kleineren Arbeitsschicht aufweisen.

7. Reifen (1) nach einem der vorhergehenden Ansprüche, **dadurch gekennzeichnet, dass** die Thermoplast-Polymerfolie (71) ungeachtet der betreffenden Zugrichtung einen Ausdehnungskoeffizienten, mit E bezeichnet, aufweist, der größer ist als 500 MPa.

8. Reifen (1) nach einem der vorhergehenden Ansprüche, **dadurch gekennzeichnet, dass** die Thermoplast-Polymerfolie (71) ungeachtet der betreffenden Zugrichtung eine maximale Zugbelastung, mit σmax bezeichnet, aufweist, die größer ist als 80 MPa.

9. Reifen (1) nach einem der vorhergehenden Ansprüche, **dadurch gekennzeichnet, dass** die Thermoplast-Polymerfolie (71) ungeachtet der betreffenden Zugrichtung eine Bruchdehnung, mit Ar bezeichnet, aufweist, die größer ist als 40 %.

10. Reifen nach einem der vorhergehenden Ansprüche, **dadurch gekennzeichnet, dass** die Thermoplast-Polymerfolie (91) wärmestabilisiert ist.

11. Reifen (1) nach einem der vorhergehenden Ansprüche, **dadurch gekennzeichnet, dass** das Thermoplast-Polymer ein Polyester ist.

12. Reifen (1) nach Anspruch 11, **dadurch gekennzeichnet, dass** der Polyester ein Polyethylenterephthalat oder ein Polyethylennaphthalat ist.

13. Reifen (1) nach einem der vorhergehenden Ansprüche, **dadurch gekennzeichnet, dass** die Stärke der Thermoplast-Polymerfolie (71) zwischen 0,05 und 1 mm liegt.

14. Reifen (1) nach einem der vorhergehenden Ansprüche, **dadurch gekennzeichnet, dass** die Stärke jeder Schicht (72, 73) aus Kautschukzusammensetzung zwischen 0,05 und 2 mm liegt.

15. Reifen (1) nach einem der vorhergehenden Ansprüche, **dadurch gekennzeichnet, dass** die Scheitelbewehrung (5) aus mindestens zwei Arbeitsscheitelschichten (51, 53) aus nicht dehnbaren Verstärkungselementen, die von einer Schicht zur anderen gekreuzt sind, indem sie zu der umfänglichen Richtung Winkel zwischen 10° und 45° bilden, ausgebildet ist.

16. Reifen (1) nach einem der vorhergehenden Ansprüche, **dadurch gekennzeichnet, dass** die Scheitelbewehrung (5) mindestens eine Schicht (52) umfänglicher Verstärkungselemente aufweist.

17. Reifen nach einem der vorhergehenden Ansprüche, **dadurch gekennzeichnet, dass** die Scheitelbewehrung (5) ferner eine Triangulationsschicht bildet, die aus metallischen Verstärkungselementen ausgebildet ist, die mit der umfänglichen Richtung Winkel bilden, die größer als 60° sind.

## Claims

1. Tyre (1) with radial carcass reinforcement (2), made up of at least one layer of metal reinforcing elements, the said tyre comprising a crown reinforcement (5), itself radially capped by a tread (6) comprising at least two circumferentially continuous cutouts (8), the said tread being connected to two beads via two sidewalls, **characterized in that** the crown reinforcement (5) comprises at least two axially continuous multilayer laminates (7a, 7b) positioned in contact with one another circumferentially to form a circumferentially continuous protective layer, **in that** the said at least two laminates (7a, 7b) comprise at least one multiaxially stretched thermoplastic polymer film (71) positioned between and in contact with two layers (72, 73) of rubber composition and **in that,** in a meridian plane, the axial ends (9) of the said at least two laminates (7a, 7b) are respectively axially on the outside of the axially outermost points (10) of two different circumferentially continuous cutouts (8).

2. Tyre (1) according to Claim 1, **characterized in that** each axial end (9) of the said at least two laminates (7a, 7b) is axially on the outside of the axially outermost point (10) of the axially outermost circumferential cutout (8).

3. Tyre (1) according to Claim 1 or 2, **characterized in that** the axial distance (d) between the axial end (9) of the said at least two laminates (7a, 7b) and the axially outermost point (10) of the circumferentially continuous cutout axially closest to the said end (9) of the said at least two laminates (7a, 7b) is less than 12 mm.

4. Tyre (1) according to one of Claims 1 to 3, **characterized in that** the axial distance (d) between the axial end (9) of the said at least two laminates (7a, 7b) and the axially outermost point (10) of the circumferentially continuous cutout (8) axially closest to the said end (9) of the said at least two laminates (7a, 7b) is greater than 4 mm.

5. Tyre (1) according to one of the preceding claims, **characterized in that** the ends of the said at least two multilayer laminates (7a, 7b) in the circumferential direction have a cutout that makes with the circumferential direction an angle (α) substantially equivalent to that of the reinforcing elements of the crown reinforcing layer radially closest to the said at least two laminates (7a, 7b).

6. Tyre (1) according to one of the preceding claims, **characterized in that** the said at least two laminates (7a, 7b) have an axial width that is narrower than the axial width of the least-wide working layer.

7. Tyre (1) according to one of the preceding claims, **characterized in that** the thermoplastic polymer film (71) has, whatever direction of tension is considered, an extension modulus denoted E that is greater than 500 MPa.

8. Tyre (1) according to one of the preceding claims, **characterized in that** the thermoplastic polymer film (71) has, whatever direction of tension is considered, a maximum tensile stress denoted σmax which is greater than 80 MPa.

9. Tyre (1) according to one of the preceding claims, **characterized in that** the thermoplastic polymer film (71) has, whatever direction of tension is considered, an elongation at break denoted Ar which is greater than 40%.

10. Tyre according to one of the preceding claims, **characterized in that** the thermoplastic polymer film is heat stabilized.

11. Tyre (1) according to one of the preceding claims, **characterized in that** the thermoplastic polymer is a polyester.

12. Tyre (1) according to Claim 11, **characterized in that** the polyester is a polyethylene terephthalate or a polyethylene naphthalate.

13. Tyre (1) according to one of the preceding claims, **characterized in that** the thickness of the thermoplastic polymer film (71) is between 0.05 and 1 mm.

14. Tyre (1) according to one of the preceding claims, **characterized in that** the thickness of each layer (72, 73) of rubber composition is between 0.05 and 2 mm.

15. Tyre (1) according to one of the preceding claims, **characterized in that** the crown reinforcement (5) is formed of at least two working crown layers (51, 53) of inextensible reinforcing elements which are crossed from one layer to the other, making with the circumferential direction angles of between 10° and 45°.

16. Tyre (1) according to one of the preceding claims, **characterized in that** the crown reinforcement (5) comprises at least one layer (52) of circumferential reinforcing elements.

17. Tyre according to one of the preceding claims, **characterized in that** the crown reinforcement (5) further comprises a triangulation layer formed of metal reinforcing elements that make with the circumferential direction angles of greater than 60.
